# EUROPEAN PATENT SPECIFICATION

(11) **EP 4 097 172 B1**
(45) Date of publication and mention of the grant of the patent: **07.02.2024**
(21) Application number: 20835891.1
(22) Date of filing: 23.12.2020
(51) Int. Cl.: C08J 9/00, C08J 9/12

(54) **FOAMED SHEET, MANUFACTURE, AND METHOD FOR PRODUCING FOAMED SHEET**
GESCHÄUMTE PLATTE, FERTIGUNG UND VERFAHREN ZUR HERSTELLUNG EINER GESCHÄUMTEN PLATTE
FEUILLE DE MOUSSE, PRODUIT MANUFACTURÉ ET PROCÉDÉ DE PRODUCTION DE FEUILLE DE MOUSSE

(30) Priority: 27.01.2020 JP 2020011077; 20.11.2020 JP 2020193688
(43) Date of publication of application: 07.12.2022
(73) Proprietor: Ricoh Company, Ltd., Tokyo 143-8555 (JP)
(72) Inventor: NEMOTO, Taichi, Tokyo 143-8555 (JP)
(74) Representative: Marks & Clerk LLP
(86) International application number: PCT/IB2020/062367
(87) International publication number: WO 2021/152387

(56) References cited:
- US-A1- 2007 027 247

## Description

### [Technical Field]

The present disclosure relates to a foamed sheet, a manufacture, and a method for producing a foamed sheet.

### [Background Art]

Plastic products are widely distributed after processed into various shapes such as a bag and a container. Those plastic products, however, have such properties that are not easily degradable in the natural world. This raises a problem with how to dispose of the plastic products after use. Under such circumstances, developments on materials for the plastic products have actively been made to replace non-degradable plastics, which are not easily degradable in the natural world, with biodegradable plastics which are degradable in the natural world.

Among plastics having biodegradability, polylactic acid has attracted attention as an alternative to non-degradable plastics because it has biodegradability and physical properties similar to those of, for example, polystyrene that has hitherto been used as plastics. In order to widely use the polylactic acid, foamed sheets have been proposed in which the polylactic acid is foamed to reduce the amount of the polylactic acid (see, for example, PTLs 1 to 4). Also, it has been demanded to form the polylactic acid into a polylactic acid sheet, which is easier to process into various shapes. However, there are a small number of proposals of foamed sheets obtained by foaming the polylactic acid.

Further, large foam diameters lead to degradation in strength and flexibility (resilience), easily causing cracking. This becomes significant in thinner sheets, which is why arrangement of fine and uniform foam diameters is desired.

US-A-2007/027247 discloses a biodegradable polyester resin composition containing 100 parts by mass of a biodegradable polyester resin containing 59% mole or more of a hydroxycarboxylic acid unit, 0.01 to 10 parts by mass of a (meth)acrylic acid ester compound and 0.05 to 20 parts by mass of a layered silicate.

### [Citation List]

### [Patent Literature]

[PTL 1] JP-2007-46019-A,
[PTL 2] JP-5207277-B,
[PTL 3] JP-5454137-B,
[PTL 4] JP-2006-328225-A

### [Summary of Invention]

### [Technical Problem]

The present disclosure has an object to provide a foamed sheet that is excellent in strength.

### [Solution to Problem]

According to one aspect of the present disclosure, a foamed sheet includes an aliphatic polyester resin and a filler. An average foam diameter of the foamed sheet is 15 micrometers or less. An average thickness of the foamed sheet is 3,000 micrometers or less. A ratio of a length of a side of the foamed sheet in a longer direction or a side of the foamed sheet in a direction perpendicular to the longer direction to the average thickness is 250 or more.

### [Advantageous Effects of Invention]

The present disclosure can provide a foamed sheet that is excellent in strength.

### [Brief Description of Drawings]

The accompanying drawings are intended to depict example embodiments of the present invention and should not be interpreted to limit the scope thereof. The accompanying drawings are not to be considered as drawn to scale unless explicitly noted. Also, identical or similar reference numerals designate identical or similar components throughout the several views.
[FIG. 1]

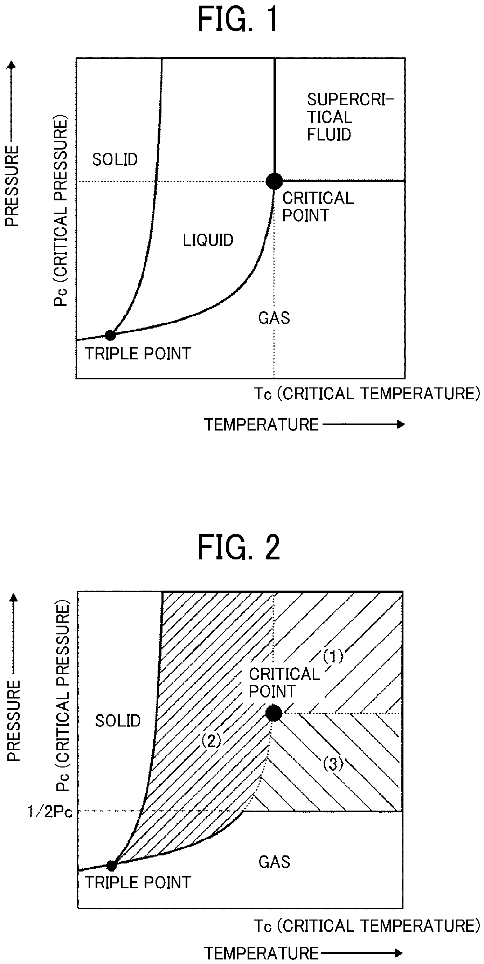

   FIG. 1 is a phase diagram illustrating states of a substance changeable depending on temperature and pressure.
[FIG. 2]
   FIG. 2 is a phase diagram for defining a range of a compressive fluid.
[FIG. 3]

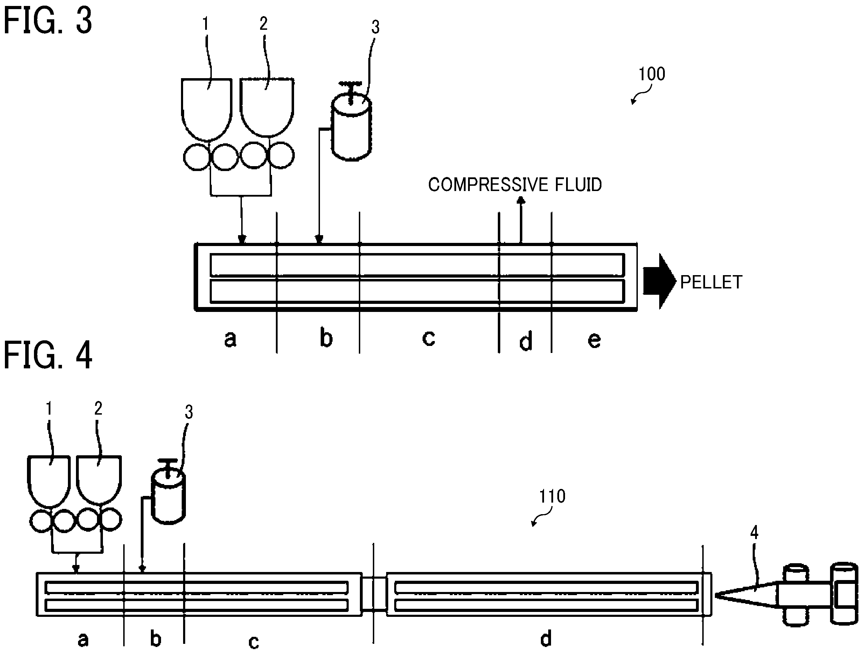

   FIG. 3 is a schematic view illustrating one example of a continuous kneading apparatus used for producing an aliphatic polyester resin composition of the present disclosure.
[FIG. 4]
   FIG. 4 is a schematic view illustrating one example of a continuous foaming apparatus used for producing a foamed sheet of the present disclosure.

### [Description of Embodiments]

The terminology used herein is for the purpose of describing particular embodiments only and is not intended to be limiting of the present invention. As used herein, the singular forms "a", "an" and "the" are intended to include the plural forms as well, unless the context clearly indicates otherwise.

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

### (Foamed sheet)

A foamed sheet of the present disclosure (hereinafter also referred to as "aliphatic polyester resin foamed sheet") includes an aliphatic polyester resin and a filler, and if necessary further includes other ingredients. The shape of the foamed sheet is not particularly limited and appropriately selected depending on the intended purpose. Examples of the shape include, but are not limited to, a circular shape, a square shape, and a regular polygonal shape.

It is known that polylactic acid, which is one type of aliphatic polyester resins, drastically decreases in viscosity at a temperature in the vicinity of the melting point thereof. This is likely to cause, for example, breakage of foams and coalescence of foams. As a result, it is difficult to make the foam diameter fine and uniform in the first place.

JP-2007-46019-A and JP-5207277-B describe polylactic acid foamed sheets. In particular, the finely foamed body disclosed in JP-5207277-B is produced by using carbon dioxide as a foaming agent and has a foam diameter of 1 micrometer or less. However, these are produced in a batch-type apparatus where foaming is performed at a temperature equal to or lower than the melting point of the polymer, and cannot be mass-produced on an industrial scale through a continuous process.

JP-5454137-B proposes a polylactic acid-containing foamed sheet produced continuously with an extruder. However, this polylactic acid-containing foamed sheet contains other resins mixed with the polylactic acid and a sheet thickness of 10 mm or more. Thus, it has limited applications and cannot completely replace non-degradable plastics.

The present inventors conducted studies to obtain an aliphatic polyester resin foamed sheet that can solve the above problems; i.e., an aliphatic polyester resin foamed sheet that has fine and uniform foams and can be mass-produced on an industrial scale. As a result, the present inventors have found that by highly dispersing a filler, it is possible to produce an aliphatic polyester resin foamed sheet having fine and uniform foams. On the basis of this finding, the present invention has been completed.

### <Aliphatic polyester resin>

An aliphatic polyester resin is biodegraded by microorganisms and has attracted attention as an environmentally-friendly, low-environmental-load polymer material (see "Structure, physical properties, and biodegradability of aliphatic polyester", KOBUNSHI (High Polymers, Japan), 2001, Vol. 50, No. 6, pp. 374-377").

Examples of the aliphatic polyester resin include, but are not limited to, a copolymer between D-lactic acid and L-lactic acid, a homopolymer of D-lactic acid (D body) or L-lactic acid (L body), and ring-opening polymers of one or more lactides selected from the group consisting of D-lactide (D body), L-lactide (L body), and DL-lactide. One of these may be used alone or two or more of these may be used in combination.

When a copolymer between D-lactic acid and L-lactic acid is used as the aliphatic polyester resin, the ratio between D-lactic acid and L-lactic acid is not particularly limited and may be appropriately selected depending on the intended purpose. The copolymer between D-lactic acid and L-lactic acid, as the optical isomer of a smaller amount decreases, tends to increase in crystallinity to have an increased melting point or glass transition temperature. Meanwhile, as the optical isomer of a smaller amount increases, the copolymer tends to decrease in crystallinity to be non-crystalline eventually. Crystallinity is a contributing factor of heat resistance of a foamed sheet and a forming temperature for foaming. Thus, crystallinity may be determined depending on applications and is not particularly limited. As used herein, "crystallinity" expresses a degree of crystallization, a speed of crystallization, or both. High crystallinity means a high degree of crystallization, a high speed of crystallization, or both. The polylactic acid used may be an appropriately synthesized product or a commercially available product.

In terms of biodegradability and recycle performance (easiness in recycle), the proportion of an aliphatic polyester resin is preferably 98% by mass or more, more preferably 99% by mass or more, relative to the total amount of organic substances in the foamed sheet. When it is 98% by mass or more, it is possible to prevent an unfavorable phenomenon where the polylactic acid is biodegraded but the other ingredients having no biodegradability remain.

### <Measuring method of the proportion of the aliphatic polyester resin>

The proportion of the aliphatic polyester resin can be calculated from the relative amounts of materials to be charged. When the material ratio is unknown, for example, the following GCMS analysis can be performed to identify the ingredient through comparison using a known aliphatic polyester resin as a standard sample. If necessary, the area ratio of spectra by NMR measurement or other analysis methods can be used in combination with the GCMS analysis for calculation.
- Measurement by GCMS analysis-
- GCMS: QP2010 available from Shimadzu Corporation, with Frontier Lab Py3030D as auxiliary equipment
- Separation column: Frontier Lab Ultra ALLOY UA5-30M-0.25F
- Heating temperature of sample: 300 degrees Celsius
- Column oven temperature: increasing from 50 degrees Celsius (retained for 1 minute) at 15 degrees Celsius/min to 320 degrees Celsius (6 minutes)
- Ionization method: Electron Ionization (E.I) method
- Detection mass range: 25 to 700 (m/z)

### <Filler>

The filler (hereinafter also referred to as "foam nucleating material") is contained to adjust, for example, the size and amount the foams of the foamed sheet.

Examples of the filler include, but are not limited to, inorganic fillers and organic fillers. One of these may be used alone or two or more of these may be used in combination.

Examples of the inorganic fillers include, but are not limited to, talc, kaolin, calcium carbonate, layered silicate, zinc carbonate, wollastonite, silica, alumina, magnesium oxide, titanium oxide, calcium silicate, sodium aluminate, calcium aluminate, sodium aluminosilicate, magnesium silicate, glass balloon, carbon black, zinc oxide, antimony trioxide, zeolite, hydrotalcite, metal fibers, metal whiskers, ceramic whiskers, potassium titanate, boron nitride, graphite, glass fibers, and carbon fibers.

Examples of the organic fillers include, but are not limited to, naturally occurring polymers such as starch, cellulose particles, wood powder, soybean curd residue (*okara*), chaff, and bran, modified products thereof, sorbitol compounds, benzoic acid, metal salts of benzoic acid compounds, metal salts of phosphate esters, and rosin compounds.

Among them, in terms of their low-environmental impacts, inorganic nucleating materials are preferable. Among the inorganic nucleating materials, silica, titanium oxide, and layered silicate are more preferable because these can be dispersed at a nano level to produce uniform cells.

Among them, silica, which is an inorganic nucleating agent, is preferable in terms of its high affinity to the below-described compressive fluid. Also, when other fillers than silica are used as a base, those fillers are preferably surface-treated with silica.

Silica is a substance containing silicon dioxide represented by SiO₂ as a main ingredient. Depending on the production method of silica particles, it is roughly classified into fumed silica and wet silica. In the present disclosure, any of fumed silica and wet silica can be used.

If necessary, the silica is subjected to a surface treatment with a reactive compound such as a silane coupling agent, a titanate coupling agent, or organosiloxane.

In particular, a silane coupling agent can be suitably used for the surface treatment of silica particles. Specific examples of the silane coupling agent include, but are not limited to, vinyltrimethoxysilane, gamma-glycidoxypropyltrimethoxysilane, gamma-methacryloxypropyltrimethoxysilane, gamma-aminopropyltrimethoxysilane, and gamma-mercaptopropyltriethoxy silane.

The proportion of the silica is preferably 50% by mass or more, more preferably 60% by mass or more, relative to the total amount of inorganic substances in the foamed sheet, both when a filler surface-treated with silica is used and when silica is used in combination with other fillers than silica. When the proportion of the silica is 50% by mass or more, foams become uniform and fine.

The number average particle diameter of the filler is preferably from 0.01 micrometers through 0.1 micrometers, more preferably from 0.03 micrometers through 0.08 micrometers. When the number average particle diameter of the filler is 0.01 micrometers or more, it is possible to prevent degradation in physical properties as sheets such as impact resistance due to poor dispersibility of the filler. When the number average particle diameter of the filler is 0.1 micrometers or less, it is possible to prevent an unfavorable phenomenon where the resultant foamed molded body is degraded in surface appearance.

The number average particle diameter of the filler may be expressed with a BET specific surface area by conveniently assuming the filler as a true sphere. In this case, the BET specific surface area is preferably from 30 m²/g through 300 m²/g.

The standard deviation (σ) of the number average particle diameter of the filler is preferably 0.015 or more but 0.20 or less. The standard deviation (σ) falling within the above ranges indicates uniform foams of the foamed sheet.

Incidentally, there is a correlation between the standard deviation of the filler and the standard deviation of the foams. In other words, the standard deviation of the filler falling within the above ranges can mean uniform foams.

A method of measuring the number average particle diameter of the filler in the foamed sheet is not particularly limited and may be appropriately selected depending on the intended purpose. For example, the following method can be employed.

Specifically, the foamed sheet is subjected to cross-section processing with an ion milling device to observe the resultant cross section with a SEM.

Using software of Image-Pro Premier (available from mediacy Co.) for the obtained cross-section SEM image (at a magnification of × 10,000), the white components representing the filler and the polylactic acid components were binarized. In an area of 10 micrometers × 6 micrometers, the particle diameter (Feret diameter) was determined. The white components (filler) having Feret diameters of 0.005 micrometers or more were calculated for number average particle diameter and standard deviation (σ). The Feret diameter means a longer diameter.

Incidentally, regarding the number average particle diameter of the filler in the foamed sheet, it is desirable that the number average particle diameter obtained by measuring the filler contained in the sheet as described above be almost the same value as the number average particle diameter measured before the filler is charged to the polylactic acid in the production of a foamed sheet.

The proportion of the filler having particle diameters of 10 micrometers or more (coarse particles) is preferably 100 or less particles per 1 g of the foamed sheet, more preferably 40 or less particles per 1 g of the foamed sheet. When the number of the coarse particles is 100 or less, the foam diameter is fine, and physical properties such as appearance and strength are favorable.

The proportion of the coarse particles can be measured in the following manner. Specifically, 50 mg of the foamed sheet is allowed to melt to form a thin film of 10 micrometers. The thin film is observed under an optical microscope (available from NIKON CORPORATION, FX-21, at a magnitude of × 100) to count the number of the coarse particles formed from the filler having particle diameters of 10 micrometers or more.

The amount of the filler may be appropriately selected depending on the intended purpose as long as physical properties of the resultant foamed sheet are not degraded. It is preferably from 0.1% by mass through 10% by mass, more preferably from 0.5% by mass through 5% by mass, relative to the entirety of the foamed sheet. When the amount of the filler is from 0.1% by mass through 10% by mass, it is possible to prevent occurrence of an unfavorable phenomenon where the fillers aggregate together.

### <Other ingredients>

The other ingredients are not particularly limited and may be appropriately selected depending on the intended purpose as long as they are usually contained in the foamed sheet. Examples of the other ingredients include, but are not limited to, a crosslinking agent.

The crosslinking agent is preferably a (meth)acrylic acid ester compound containing two or more (meth)acrylic groups in a molecule thereof or a (meth)acrylic acid ester compound containing one or more (meth)acrylic groups and one or more glycidyl groups or vinyl groups in a molecule thereof. This is because such a (meth)acrylic acid ester compound has high reactivity with a polylactic acid resin to leave a small amount of the monomer, and colors the resin to a small extent.

Specific examples of the (meth)acrylic acid ester compound include, but are not limited to, glycidyl methacrylate, glycidyl acrylate, glycerol dimethacrylate, trimethylolpropane trimethacrylate, trimethylolpropane triacrylate, allyloxypolyethylene glycol monoacrylate, allyloxypolyethylene glycol monomethacrylate, polyethylene glycol dimethacrylate, polyethylene glycol diacrylate, polypropylene glycol dimethacrylate, polypropylene glycol diacrylate, and polytetramethylene glycol dimethacrylate. It may be a copolymer of alkylenes in which the alkylene glycol moieties in the above-listed compounds have various lengths. Further examples include butanediol methacrylate and butanediol acrylate.

Incorporation of the crosslinking agent can impart melt tension to adjust the expansion ratio of a foamed polylactic acid sheet. A method of imparting melt tension is, for example, a method of dispersing a filler such as layered silicate at a nano level, a method of crosslinking a resin composition using, for example, a crosslinking agent or a crosslinking aid, a method of crosslinking a resin composition with, for example, electron beams, or a method of adding another resin composition having a high melt tension.

In addition to the above, the other ingredients include additives such as a thermal stabilizer, an antioxidant, and a plasticizer. One of these may be used alone or two or more of these may be used in combination.

In terms of recycle performance, the proportion of the other ingredients is preferably 2% by mass or less, more preferably 1% by mass or less, relative to the total amount of organic substances in the foamed sheet.

### <Physical properties of the foamed sheet>

The average foam diameter of the foamed sheet of the present disclosure is 15 micrometers or less and preferably 7 micrometers or less. The average foam diameter is preferably 0.01 micrometers or more.

When the average foam diameter is more than 15 micrometers, the strength of the resultant foamed sheet may be lowered and the thickness (average thickness) of the foamed sheet may be uncontrollable to the intended range. When the average foam diameter is 0.01 micrometers or more, the expansion ratio can be increased.

The size of the average foam diameter can be adjusted by, for example, the amount of the filler, the dispersion state, and the melt tension, which are however non-limitative means.

A method of measuring the average foam diameter of the foamed sheet is not particularly limited and may be appropriately selected depending on the intended purpose. For example, the average foam diameter of the foamed sheet can be measured by subjecting the foamed sheet to cross-section processing with an ion milling device and observing the resultant cross section with a SEM (VE-9800, available from KEYENCE CORPORATION).

Using software of Image-Pro Premier (available from mediacy Co.) for the obtained cross-section SEM image (at a magnification of ×3,000), the gray components representing the foams (pores) and the resin components (white) are binarized. In an area of 35 micrometers × 20 micrometers, the average particle diameter (Feret diameter) is determined. The gray components (foams) having Feret diameters of 0.5 micrometers or more are calculated for the average foam diameter.

The average thickness of the foamed sheet of the present disclosure is 3,000 micrometers or less and is preferably 1,000 micrometers.

When the average thickness is more than 3,000 micrometers, molding as a foamed sheet is difficult.

In the present disclosure, even if the average thickness is the above value, strength and flexibility can be maintained because the foamed sheet foams finely and uniformly.

A ratio of a length of a side of the foamed sheet of the present disclosure in a longer direction or a side of the foamed sheet in a direction perpendicular to the longer direction to the average thickness is 250 or more and is preferably 2,500 or more.

The foamed sheet in which the ratio (longer side/thickness) is 250 or more is, as described below, difficult to produce in a batch manner, and can be produced through a continuous process.

When the shape of the foamed sheet is a circular shape, the diameter passing through the center of the circle is defined as the longer direction. When the shape of the foamed sheet is an elliptical shape, the straight line passing through the two focal points of the ellipse is defined as the longer direction.

When the shape of the foamed sheet is a polygonal shape, the longest side in the polygon is defined as the longer direction. When the polygon is a regular polygon, any side may be defined as the longer direction because all of the sides are of the same length.

The bulk density of the foamed sheet is preferably from 0.1 g/cm³ or more but 0.9 g/cm³ or less, more preferably 0.7 g/cm³ or less, further preferably 0.5 g/cm³ or less.

When the bulk density of the foamed sheet is within this range, the resultant foamed sheet can have an excellent balance between strength and lightness in weight

The bulk density of the foamed sheet can be measured in the following manner, for example. Specifically, after left for 24 hours or longer in an environment of 23 degrees Celsius in temperature and 50% in relative humidity, the foamed sheet is measured for bulk volume from outer dimensions. Then, the weight (g) of this foamed sheet is precisely measured. The weight of the foamed sheet is divided by the bulk volume to determine the bulk density.

The foamed sheet of the present disclosure may be used as the below-described manufacture. For example, printing may be performed before use on the sheet without any pre-treatment. Alternatively, a mold may be used to process the foamed sheet to obtain a product.

A method of processing the sheet using a mold is not particularly limited and may be a hitherto known method for thermoplastic resins. Examples of the method include, but are not limited to, vacuum molding, air pressure molding, vacuum air pressure molding, and press molding.

### (Manufacture)

A manufacture of the present disclosure includes the foamed sheet of the present disclosure and if necessary further includes other ingredients.

The other ingredients are not particularly limited and may be appropriately selected depending on the intended purpose as long as they are used in typical resin products.

Examples of the manufacture (which may be referred to as a "consumption material") include, but are not limited to, livingware such as a bag, a packaging container, a tray, dishware, cutlery, and stationery, and a cushioning material. The concept of this manufacture includes not only an original fabric obtained by forming the sheet into a roll as an intermediate product to be processed into the manufacture and a manufacture alone as a single product, but also parts formed of the manufacture such as a handle of the tray and products provided with manufactures such as a tray with a handle.

Examples of the bag include, but are not limited to, a plastic bag, a shopping bag, and a garbage bag.

Examples of the stationery include, but are not limited to, a file folder and a badge.

Existing foamed sheets have problems with physical properties as sheets such as sheet strength and flexibility because foam diameters and variation therein are large.

The manufacture molded using the foamed sheet of the present disclosure has excellent physical properties, and thus can also be used in other applications than those as the above livingware, for example, in a wide variety of applications such as sheets for industrial materials, agriculture, foods, pharmaceuticals, and cosmetics; and packaging materials.

The foamed sheet of the present disclosure is useful in applications requiring biodegradability of the foamed sheet, especially as a packaging material used for foods and a medical-use sheet for, for example, cosmetics and pharmaceuticals. For example, thinning the foamed sheet can be expected for the resultant foamed sheet to have improved performances.

### (Method for producing the foamed sheet)

A method for producing the foamed sheet of the present disclosure includes a kneading step and a foaming step and if necessary further includes other steps.

The kneading step and the foaming step may be performed at the same time or as separate steps.

### <Kneading step>

The kneading step is a step of kneading the polylactic acid and the filler in the presence of a compressive fluid at a temperature lower than the melting point of the polylactic acid.

In the kneading step, for more efficient foaming, a foaming agent may be added besides the polylactic acid and the filler.

Incidentally, a mixture of the polylactic acid, the filler, and the foaming agent before foaming may be referred to as a polylactic acid composition or a masterbatch.

### <<Foaming agent>>

In terms of the ability to easily produce a polylactic acid-based resin foamed sheet having a high expansion ratio, examples of the foaming agent include: but are not limited to, hydrocarbons including lower alkanes such as propane, normal butane, iso butane, normal pentane, iso pentane, and hexane; ethers such as dimethyl ether; halogenated hydrocarbons such as methyl chloride and ethyl chloride; and physical foaming agents such as compressive gases of, for example, carbon dioxide and nitrogen.

Among them, use of compressive gases of, for example, carbon dioxide and nitrogen is preferable from the viewpoints of being odorless, able to be handled safely, and low in environmental load.

The aliphatic polyester including polylactic acid has such a property that its melt viscosity drastically decreases after the melting point. Thus, in kneading the filler and other materials, the filler easily aggregates. This phenomenon is significant when the size of the filler is small.

In the present disclosure, in order to uniformly disperse the filler in polylactic acid having such a property, a compressive fluid is used for the kneading. Incidentally, when the compressive fluid is the same as the foaming agent, kneading of the filler and foaming can be performed as a single process, which is more preferable as the form of production from the viewpoint of reduction in environmental load.

Description will be given to the reason why use of a compressive fluid is preferable in kneading the filler and the polylactic acid.

It is generally known that the compressive fluid plasticizes a resin to decrease a melt viscosity of the resin (see "Latest application technique of supercritical fluid", NTS). A decrease in the melt viscosity and an improvement in the kneading performance seem to be contradictory. Actually, a pressure may be applied without using the compressive fluid for kneading a general filler, but this decreases the free volume of the resin to aim at an increase in interaction between the resins (increase in viscosity), which is opposite to plasticization of the resin (see "k. Yang. R. Ozisik R. Polymer, 47. 2849 (2006)").

Hitherto, it is known that a compressive fluid has such a property as to plasticize (soften) a resin, and the resin behaves like a liquid in the compressive fluid at an increased temperature. Dispersing the filler in the resin in such a state is like dispersing the filler in a liquid. As a result, the filler aggregates in the liquid to be unable to obtain a highly dispersed resin composition. In other words, the resin cannot have a suitable viscosity for kneading in the presence of the compressive fluid, and thus it had been considered difficult to use the compressive fluid for kneading the resin and the filler.

Under such circumstances, the present inventors intensively studied whether the compressive fluid can be used for kneading between the polylactic acid and the filler, and have found that the polylactic acid has a suitable viscosity for kneading at a temperature lower than the melting point of the polylactic acid, resulting in being able to knead the filler. In particular, the polylactic acid, the melt viscosity of which drastically decreases at a temperature equal to or higher than the melting point, enabled kneading only in the state of low melt viscosity. In the present disclosure, meanwhile, the filler can be kneaded in the state of high viscosity, and also the compressive fluid can be used as the foaming agent as is, which is more suitable.

### <<Compressive fluid>>

Examples of a substance that can be used in the state of the compressive fluid include, but are not limited to, carbon monoxide, carbon dioxide, dinitrogen monoxide, nitrogen, methane, ethane, propane, 2,3-dimethylbutane, ethylene, and dimethyl ether. Among them, carbon dioxide is preferable because the critical pressure and critical temperature of carbon dioxide are about 7.4 MPa and about 31 degrees Celsius, respectively, and thus a supercritical state of carbon dioxide is easily generated. In addition, carbon dioxide is non-flammable and easily handled. One of these compressive fluids may be used alone or two or more of these compressive fluids may be used in combination.

Referring now to FIG. 1 and FIG. 2, description will be given to the compressive fluid used for producing an aliphatic polyester resin composition. FIG. 1 is a phase diagram illustrating the state of a substance depending on pressure and temperature. FIG. 2 is a phase diagram which defines a range of a compressive fluid. The "compressive fluid" in the present embodiment refers to a state of a substance present in any one of the regions (1), (2) and (3) of FIG. 2 in the phase diagram illustrated in FIG. 1.

In such regions, the substance is known to have extremely high density and show different behaviors from those observed at normal temperature and normal pressure. Incidentally, the substance in the region (1) is a supercritical fluid. The supercritical fluid is a fluid that exists as a non-condensable high-density fluid at temperature and pressure exceeding limits (critical points) at which a gas and a liquid can coexist and that does not condense even when it is compressed. The substance in the region (2) turns into a liquid but represents a liquefied gas obtained by compressing a substance existing as a gas at normal temperature (25 degrees Celsius) and normal pressure (1 atm). The substance is in the region (3) is in the state of a gas but represents a high-pressure gas of which pressure is 1/2 or higher of the critical pressure (Pc), i.e. 1/2 Pc or higher.

Solubility of the compressive fluid varies depending on the combination of the kind of the resin and the compressive fluid and temperature and pressure. Thus, there is a need to appropriately adjust the amount of the compressive fluid supplied.

For example, in the combination of polylactic acid and carbon dioxide, the amount of the carbon dioxide supplied is preferably 2% by mass or more but 30% by mass or less. When the amount of the carbon dioxide supplied is 2% by mass or more, it is possible to prevent an unfavorable phenomenon where an obtainable plasticizing effect is limitative. When the amount of the carbon dioxide supplied is 30% by mass or less, it is possible to prevent an unfavorable phenomenon where the carbon dioxide and the polylactic acid are phase-separated to be unable to obtain the foamed sheet having a uniform thickness.

### <Kneading apparatus>

As a kneading apparatus used for producing the polylactic acid composition, a continuous process may be employed or a batch process may be employed. Preferably, a reaction process is appropriately selected by considering, for example, efficiency of an apparatus, characteristics of a product, and quality.

In terms of the ability to achieve the viscosity suitable for kneading, the kneading apparatus usable is, for example, a single screw extruder, a twin screw extruder, a kneader, a screw-less basket-shaped stirring vessel, BIVOLAK (available from Sumitomo Heavy Industries, Ltd.), N-SCR (available from Mitsubishi Heavy Industries, Ltd.), or a tube-shaped polymerization vessel equipped with a spectacle-shaped blade (available from Hitachi, Ltd.), lattice-blade or Kenix-type, or Sulzer-type SMI,X-type static mixer. In terms of color tone, the kneading apparatus usable is a finisher that is a self-cleaning-type polymerization apparatus, N-SCR, or a twin-screw extruder. Among them, a finisher and N-SCR are preferable in terms of production efficiency, color tone of a resin, stability, and heat resistance.

As illustrated in FIG. 3, a continuous kneading apparatus 100 uses a twin screw extruder (available from JSW) and includes (screw caliber: 42 mm, L/D=48, Device 1), (raw material mixing and melting area a, Device 2), (compressive fluid supplying area b, Device 3), kneading area c, molding area d, and T-die 4. A compressive fluid (liquid material) is supplied by a metering pump. Solid raw materials such as the resin pellets and calcium carbonate are supplied by a quantitative feeder.

### <<Raw material mixing and melting area>>

In the raw material mixing and melting area, the resin pellets and the filler are mixed and heated. The heating temperature is set to a temperature that is equal to or higher than the melting temperature of the resin, which makes it possible to uniformly mix the mixture with a compressive fluid in a subsequent area where the compressive fluid is to be supplied.

### <<Compressive fluid supplying area>>

The resin pellets become melted through warming, and the compressive fluid is supplied in the state that the filler is wetted, to thereby plasticize the melted resin.

### <<Kneading area>>

The temperature in the kneading area is set so that the viscosity suitable for kneading the filler is achieved. The setting temperature is not particularly limited because it varies depending on, for example, the specification of a reaction apparatus, the kind of a resin, and the structure and molecular weight of the resin. However, for commercially available polylactic acid having a weight average molecular weight (Mw) of about 200,000, the kneading is usually performed at the melting point of polylactic acid plus 10 degrees Celsius through 20 degrees Celsius. Meanwhile, the present disclosure has the feature that the kneading is performed at a temperature lower than the melting point of polylactic acid. In the present disclosure, it is possible to perform the kneading at a relatively high viscosity at the temperature lower than the melting point of polylactic acid. Specifically, the temperature for the kneading is the melting point of polylactic acid minus 20 degrees Celsius through 80 degrees Celsius, more preferably the melting point of polylactic acid minus 30 degrees Celsius through 60 degrees Celsius. Conveniently, the temperature may be set by referring to, for example, the current values of stirring power of the apparatus. However, it can be said that these setting values are usually unreachable ranges except in the present disclosure.

### <Foaming step>

The foaming step is a step of removing the compressive fluid and foaming the polylactic acid composition.

The compressive fluid can be removed by releasing the pressure.

The temperature in the foaming step is preferably equal to or higher than the melting point of the polylactic acid resin.

In the foaming step, in response to treatments to change solubility of the compressive fluid such as pressure reduction and heating, the compressive fluid dissolved in the polylactic acid composition vaporizes at the interface with the filler and precipitates, to thereby cause foaming. The foaming starts from the filler. Thus, only when the filler is uniformly dispersed in polylactic acid, the foamed sheet containing uniform and fine foams can be produced.

### <Other steps>

The other steps are not particularly limited and may be appropriately selected depending on the intended purpose as long as they are steps that are performed in the production of typical foamed sheets. Examples of the other steps include a molding step of processing into a sheet. Examples of the molding step include, but are not limited to, vacuum molding, air pressure molding, and press molding. The molding step produces a molded product in the form of sheet.

### [Examples]

The present disclosure will be described by way of Examples, which however should not be construed as limiting the present disclosure thereto in any way.

### (Example 1)

### <Production of foamed sheet>

### <<Preparation of masterbatch>>

The continuous kneading apparatus 100 illustrated in FIG. 3 was used to supply a polylactic acid resin and a filler as the filler to the raw material mixing and melting area a so that the total flow rate thereof would be 10 kg/hr. With the flow rate of the polylactic acid (REVODE110, obtained from HISUN Co., melting point: 178 degrees Celsius) being 9.7 kg/hr and the flow rate of titanium oxide (TTO-55(C), obtained from ISHIHARA SANGYO KAISHA, LTD.) as the filler being 0.3 kg/hr, carbon dioxide as a compressive fluid was supplied to the compressive fluid supplying area b at a flow rate of 0.99 kg/hr (equivalent to 10% by mass relative to the polylactic acid), followed by kneading in the kneading area c, to prepare a polylactic acid resin composition containing the filler by 3% by mass (3% by mass filler masterbatch).

The temperatures of the respective zones were set as follows: the raw material mixing and melting area a and the compressive fluid supplying area b: 190 degrees Celsius; the kneading area c: 150 degrees Celsius; the compressive fluid removing area d: 190 degrees Celsius; and the molding processing area e: 190 degrees Celsius. With the pressures of the respective zones being set as follows: from the compressive fluid supplying area b to the kneading area c: 7.0 MPa; and the compressive fluid removing area d: 0.5 MPa, the composition was extruded as a strand. After cooled in a water bath, the strand was pelletized with a strand cutter to obtain a masterbatch containing the filler by 3% by mass.

A 15% by mass masterbatch was obtained with polylactic acid (REVODE110, obtained from HISUN Co., melting point: 178 degrees Celsius) set to 8.5 kg/hr and titanium oxide (TTO-55(C), obtained from ISHIHARA SANGYO KAISHA, LTD.) as the filler set to 1.5 kg/hr.

### <<Production of the foamed sheet>>

The continuous foamed sheet forming apparatus 110 illustrated in FIG. 4 was used to supply the 3% by mass filler masterbatch and the polylactic acid resin (Revode190, obtained from HISUN Co.) so that the total flow rate thereof would be 10 kg/hr. In order for the filler to be 0.5% by mass, the flow rate of the 3% by mass filler masterbatch and the flow rate of the polylactic acid (REVODE110, obtained from HISUN Co. melting point: 178 degrees Celsius) were set to 1.67 kg/hr and 8.33 kg/hr, respectively. Carbon dioxide as the compressive fluid was supplied at 0.99 kg/h (equivalent to 10% by mass relative to the polylactic acid), followed by kneading. The kneaded product was sent to the second extruder 4.

The kneaded product was discharged at 10 kg/h from a circular mold having a slit diameter of 70 mm attached to the tip of the second extruder, and cooled to 167 degrees Celsius as the resin temperature. The compressive fluid was removed from the aliphatic polyester resin composition kneaded in the second extruder heating area d for extrusion foaming. The cylindrical polylactic acid-based foamed sheet after the extrusion from the mold slit was allowed to contour on a mandrel being cooled, and the outer surface thereof was sprayed with air from an air ring for cold molding. The resultant was cut with a cutter into a flat sheet, which was wound around a cylindrical paper tube to obtain a rolled foamed sheet.

The temperatures of the respective zones were set as follows: the first extruder: the raw material mixing and melting area a and the compressive fluid supplying area b: 190 degrees Celsius and the kneading area c: 150 degrees Celsius; and the second extruder heating area d: 167 degrees Celsius. The pressures of the respective zones were set as follows: from the compressive fluid supplying area b to the kneading area c and the second extruder heating area d: 7.0 MPa.

### (Examples 2 and 3)

In the same manner as in Example 1 except that the ratio between the amount of the 3% by mass masterbatch and the amount of the polylactic acid resin was changed and that the amount of the filler was changed to the values presented in Table 1, polylactic acid foamed sheets of Examples 2 and 3 were produced.

### (Examples 4 and 5)

In the same manner as in Example 1 except that the average thickness of the polylactic acid foamed sheet was changed to the values presented in Tables 1 and 2, polylactic acid foamed sheets of Examples 4 and 5 were produced.

### (Examples 6 to 8 and Comparative Example 1)

In the same manner as in Example 1 except that the filler was changed to the following, polylactic acid foamed sheets of Examples 6 to 8 and Comparative Example 1 were produced.
Example 6: silica (QSG-30, obtained from Shin-Etsu Chemical Co., Ltd.)
Example 7: silica (QSG-10, obtained from Shin-Etsu Chemical Co., Ltd.)
Example 8: silica (QSG-100, obtained from Shin-Etsu Chemical Co., Ltd.)
Comparative Example 1: heavy calcium carbonate (SOFTON 2200, obtained from SHIRAISHI CALCIUM KAISHA, LTD., number average particle diameter: 1.0 micrometer)

### (Example 10)

In the same manner as in Example 1 except that the polylactic acid (PLA) was changed to Revode190 having a different optical purity, a polylactic acid foamed sheet of Example 10 was produced.

### (Example 11)

In the same manner as in Example 1 except that the polylactic acid (PLA) was added at a ratio of 80:20 as the polylactic acid (PLA) and polybutylene succinate (PTT, MCC, obtained from Biochem Co.), a polylactic acid foamed sheet of Example 11 was produced.

### (Examples 12 and 13)

In the same manner as in Example 1 except that the ratio between the amount of the 15% by mass masterbatch and the amount of the polylactic acid resin was changed and that the amount of the filler was changed to the values presented in Table 1, polylactic acid foamed sheets of Examples 12 and 13 were produced.

### (Example 9 and Comparative Example 2)

In the same manner as in Example 1 except that the temperatures of the respective zones in the production of the filler masterbatch were set as follows: the raw material mixing and melting area a and the compressive fluid supplying area b: 190 degrees Celsius; the kneading area c: 150 degrees Celsius in Example 9 or 170 degrees Celsius in Comparative Example 2; the compressive fluid removing area d: 190 degrees Celsius; and the molding processing area e: 190 degrees Celsius, polylactic acid foamed sheets of Example 9 and Comparative Example 2 was produced.

### (Comparative Example 3)

In the same manner as in Example 1 except that the kneading was performed without using a compressing fluid in the production of the filler masterbatch, a polylactic acid foamed sheet of Comparative Example 3 was produced.

The temperatures of the respective zones were set as follows: the raw material mixing and melting area a and the compressive fluid supplying area b: 190 degrees Celsius; the kneading area c: 190 degrees Celsius; the compressive fluid removing area d: 190 degrees Celsius; and the molding processing area e: 190 degrees Celsius.

The filler in each of the obtained foamed sheets was measured for number average particle diameter, number of coarse particles, and standard deviation. The foamed sheet was measured for bulk density, average foam diameter, average thickness, and ratio (longer side/thickness). Measurement results are presented in Table 1 to Table 4. Incidentally, the ratio (longer side/thickness) refers to a ratio of the length of the longer side (micrometers) in sides of the foamed sheet in a machine direction (MD) and a transverse direction (TD) to the average thickness. The ratio (longer side/thickness) of 250 or more is indicated as "A" in the tables.

Also, the obtained polylactic acid foamed sheet was evaluated for strength in the following manner. Evaluation results are presented in Table 1 to Table 4.

### <Number average particle diameter and standard deviation (σ) of the filler>

The foamed sheet was subjected to cross-section processing with an ion milling device, and the cross section was observed with a SEM (VE-9800, available from KEYENCE CORPORATION).

Using software of Image-Pro Premier (obtained from mediacy Co.) for the obtained cross-section SEM image (at a magnification of × 10,000), the white components representing the filler and the polylactic acid components were binarized. In an area of 10 micrometers × 7 micrometers, the particle diameter (Feret diameter) was determined. The white components (filler) having Feret diameters of 0.005 micrometers or more were calculated for number average particle diameter and standard deviation (σ).

### <Number of coarse particles of the filler>

The foamed sheet (50 mg) was allowed to melt to form a thin film of 10 micrometers. The thin film was observed under an optical microscope (obtained from NIKON CORPORATION, FX-21, at a magnitude of × 100) to count the number of the coarse particles formed from the filler having particle diameters of 10 micrometers or more.

This operation was repeated for five different samples of the foamed sheet, and the average value of the counted numbers was defined as the number of the coarse particles of the filler.

### <Bulk density>

After left for 24 hours or longer in an environment of 23 degrees Celsius in temperature and 50% in relative humidity, the foamed sheet was measured for bulk volume from outer dimensions. Then, the weight (g) of this foamed sheet was precisely measured. The weight of the foamed sheet was divided by the bulk volume to determine the bulk density.

### <Average foam diameter>

The average foam diameter of the foamed sheet was measured by subjecting the foamed sheet to cross-section processing with an ion milling device and observing the resultant cross section with a SEM.

Using software of Image-Pro Premier (obtained from mediacy Co.) for the obtained cross-section SEM image (at a magnification of ×3,000), the gray components representing the foams (pores) and the resin components (white) were binarized. In an area of 35 micrometers × 20 micrometers, the average particle diameter (Feret diameter) was determined. The gray components (foams) having Feret diameters of 0.5 micrometers or more were calculated for the average foam diameter.

The average foam diameter was a value obtained from the above foams in three locations.

### <Average thickness>

Using software of Image-Pro Premier (obtained from mediacy Co.) for the cross-section SEM image (at a magnification of × 100), the average thickness was determined by measuring the thicknesses in a range of 1 mm as one field of view with N=10 and by averaging the thicknesses in three fields of view.

### <Strength>

The obtained foamed sheet was measured for tensile strength according to JISK6767. The strength was evaluated based on the following evaluation criteria; i.e., the extent of the strength of the foamed sheet relative to the strength of a non-foamed sheet (polylactic acid sheet). Incidentally, the measurement result of the non-foamed sheet was found to be 55 MPa.

### -Evaluation criteria-

A: The tensile strength was 60% or higher relative to that of the non-foamed sheet.
B: The tensile strength was 40% or higher but lower than 60% relative to that of the non-foamed sheet.
C: The tensile strength was lower than 40% relative to that of the non-foamed sheet.

**[Table 1]**

| | | Example 1 | Example 2 | Example 3 | Example 4 |
|---|---|---|---|---|---|
| Polylactic acid | Kind | Revode110 | Revode 110 | Revode110 | Revode110 |
| | Amount (% by mass) | 99.5 | 99 | 97 | 99.5 |
| Filler | Kind | Titanium oxide | Titanium oxide | Titanium oxide | Titanium oxide |
| | Particle diameter (µm) | 0.04 | 0.04 | 0.04 | 0.04 |
| | Amount (% by mass) | 0.5 | 1 | 3 | 0.5 |
| Foam nucleating material in foamed sheet | Number of coarse particles (number/g) | 0 | 20 | 60 | 20 |
| | Standard deviation (σ) | 0.05 | 0.06 | 0.08 | 0.05 |
| Physical properties of foamed sheet | Bulk density (g/cm³) | 0.67 | 0.82 | 0.85 | 0.62 |
| | Average foam diameter (µm) | 8.0 | 6.5 | 4.0 | 8.0 |
| | Average thickness (µm) | 1000 | 1000 | 1000 | 3000 |
| | Ratio (longer side/thickness) | A | A | A | A |
| Evaluation of foamed sheet | Strength | A | A | A | A |

**[Table 2]**

| | | Example 5 | Example 6 | Example 7 | Example 8 |
|---|---|---|---|---|---|
| Polylactic acid | Kind | Revode 110 | Revode 110 | Revode110 | Revode110 |
| | Amount (% by mass) | 99.5 | 99.5 | 99.5 | 99.5 |
| Foam nucleating material | Kind | Titanium oxide | Silica | Silica | Silica |
| | Particle diameter (µm) | 0.04 | 0.03 | 0.015 | 0.11 |
| | Amount (% by mass) | 0.5 | 0.5 | 0.5 | 0.5 |
| Foam nucleating material in foamed sheet | Number of coarse particles (number/g) | 20 | 40 | 80 | 20 |
| | Standard deviation (σ) | 0.07 | 0.05 | 0.08 | 0.18 |
| Physical properties of foamed sheet | Bulk density (g/cm³) | 0.70 | 0.55 | 0.75 | 0.50 |
| | Average foam diameter (µm) | 8.0 | 7.0 | 12.0 | 14.0 |
| | Average thickness (µm) | 500 | 1000 | 1000 | 1000 |
| | Ratio (longer side/thickness) | A | A | A | A |
| Evaluation of foamed sheet | Strength | A | A | B | B |

**[Table 3]**

| | | Example 9 | Example 10 | Example 11 | Example 12 |
|---|---|---|---|---|---|
| Polylactic acid | Kind | Revode 110 | Revode190 | Revode 110/ PBS | Revode110 |
| | Amount (% by mass) | 99.5 | 99.5 | 99.5 | 92 |
| Foam nucleating material | Kind | Titanium oxide | Titanium oxide | Titanium oxide | Titanium oxide |
| | Particle diameter (µm) | 0.04 | 0.04 | 0.04 | 0.04 |
| | Amount (% by mass) | 0.5 | 0.5 | 0.5 | 8 |
| Foam nucleating material in foamed sheet | Number of coarse particles (number/g) | 100 | 20 | 40 | 240 |
| | Standard deviation (σ) | 0.09 | 0.06 | 0.09 | 0.46 |
| Physical properties of foamed sheet | Bulk density (g/cm³) | 0.82 | 0.88 | 0.50 | 0.45 |
| | Average foam diameter (µm) | 15.0 | 5.5 | 11.0 | 5.0 |
| | Average thickness (µm) | 1000.0 | 1000 | 1000 | 1000 |
| | Ratio (longer side/thickness) | A | A | A | A |
| Evaluation of foamed sheet | Strength | B | A | A | B |

**[Table 4]**

| | | Example 13 | Comp. Ex. 1 | Comp. Ex. 2 | Comp. Ex. 3 |
|---|---|---|---|---|---|
| Polylactic acid | Kind | Revode 110 | Revode 110 | Revode 110 | Revode 110 |
| | Amount (% by mass) | 88 | 97 | 99.5 | 97 |
| Filler | Kind | Titanium oxide | Calcium carbonate | Titanium oxide | Titanium oxide |
| | Particle diameter (µm) | 0.04 | 0.42 | 0.04 | 0.04 |
| | Amount (% by mass) | 12 | 3.0 | 0.5 | 3 |
| Foam nucleating material in foamed sheet | Number of coarse particles (number/g) | 360 | 220 | 140 | 180 |
| | Standard deviation (σ) | 0.55 | 0.58 | 0.16 | 0.22 |
| Physical properties of foamed sheet | Bulk density (g/cm³) | 0.50 | 0.45 | 0.78 | 0.90 |
| | Average foam diameter (µm) | 4.0 | 25.0 | 20.0 | 300 |
| | Average thickness (µm) | 1000 | 1000 | 1000 | 1000 |
| | Ratio (longer side/thickness) | A | A | A | A |
| Evaluation of foamed sheet | Strength | B | C | C | C |

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention.

### [Reference Signs List]

- 1: Resin pellets supply tank
- 2: Calcium carbonate supply tank
- 3: Compressive fluid supply tank
- 4: T die
- 100: Continuous kneading apparatus

## Claims

1. A foamed sheet comprising:
an aliphatic polyester resin; and
a filler,
wherein an average foam diameter of the foamed sheet is 15 micrometers or less, the average foam diameter being determined by the method as described in paragraph 0029,
wherein an average thickness of the foamed sheet is 3,000 micrometers or less, the average thickness being determined by the method as described in paragraph 0073 and
wherein a ratio of a length of a side of the foamed sheet in a longer direction or a side of the foamed sheet in a direction perpendicular to the longer direction to the average thickness is 250 or more.

2. The foamed sheet according to claim 1, wherein the filler is silica.

3. The foamed sheet according to claim 2, wherein a proportion of the silica in the foamed sheet is from 0.1% by mass through 10% by mass.

4. The foamed sheet according to claim 2 or 3, wherein a proportion of the silica is 50% by mass or more relative to a total amount of inorganic substances in the foamed sheet.

5. The foamed sheet according to any one of claims 1 to 4, wherein a number average particle diameter of the filler is 0.01 micrometers or more but 0.1 micrometers or less.

6. The foamed sheet according to any one of claims 1 to 5, wherein a proportion of the aliphatic polyester resin is 98% by mass or more relative to a total amount of organic substances in the foamed sheet.

7. The foamed sheet according to any one of claims 1 to 6, wherein the average foam diameter of the foamed sheet is 7 micrometers or less.

8. The foamed sheet according to any one of claims 1 to 7, wherein a number average particle diameter of the filler in the foamed sheet is 0.01 micrometers or more but 0.1 micrometers or less, and a proportion of the filler having a particle diameter of 10 micrometers or more is 100 particles or less per one gram of the foamed sheet.

9. A manufacture comprising
the foamed sheet according to any one of claims 1 to 8.

10. The manufacture according to claim 9, wherein the manufacture is at least one kind selected from the group consisting of a bag, a packaging container, dishware, cutlery, stationery, and a cushioning material.

11. A method for producing a foamed sheet as claimed in any one of claims 1 to 8, the method comprising:
kneading an aliphatic polyester resin and a filler in presence of a compressive fluid at a temperature lower than a melting point of the aliphatic polyester resin, to obtain an aliphatic polyester resin composition; and
removing the compressive fluid from the aliphatic polyester resin composition to foam the aliphatic polyester resin composition.

12. The method according to claim 11, wherein the compressive fluid is carbon dioxide.

## Patentansprüche

1. Geschäumte Platte, Folgendes umfassend:
ein aliphatisches Polyesterharz; und
einen Füllstoff,
wobei ein durchschnittlicher Schaumdurchmesser der geschäumten Platte 15 Mikrometer oder weniger beträgt, wobei der durchschnittliche Schaumdurchmesser durch das Verfahren bestimmt wird, wie es in Absatz 0029 beschrieben ist,
wobei eine durchschnittliche Dicke der geschäumten Platte 3 000 Mikrometer oder weniger beträgt, wobei die durchschnittliche Dicke durch das Verfahren bestimmt wird, wie es in Absatz 0073 beschrieben ist, und
wobei ein Verhältnis einer Länge einer Seite der geschäumten Platte in einer längeren Richtung oder einer Seite der geschäumten Platte in einer Richtung senkrecht zu der längeren Richtung zu der durchschnittlichen Dicke 250 oder mehr beträgt.

2. Geschäumte Platte nach Anspruch 1, wobei der Füllstoff Siliziumdioxid ist.

3. Geschäumte Platte nach Anspruch 2, wobei ein Anteil des Siliziumdioxids in der geschäumten Platte von 0,1 Massenprozent bis 10 Massenprozent beträgt.

4. Geschäumte Platte nach Anspruch 2 oder 3, wobei ein Anteil des Siliziumdioxids 50 Massenprozent oder mehr in Bezug auf eine Gesamtmenge von anorganischen Stoffen in der geschäumten Platte beträgt.

5. Geschäumte Platte nach einem der Ansprüche 1 bis 4, wobei ein zahlenmittlerer Partikeldurchmesser des Füllstoffs 0,01 Mikrometer oder mehr, aber 0,1 Mikrometer oder weniger beträgt.

6. Geschäumte Platte nach einem der Ansprüche 1 bis 5, wobei ein Anteil des aliphatischen Polyesterharzes 98 Massenprozent oder mehr in Bezug auf eine Gesamtmenge an organischen Substanzen in der geschäumten Platte beträgt.

7. Geschäumte Platte nach einem der Ansprüche 1 bis 6, wobei der durchschnittliche Schaumdurchmesser der geschäumten Platte 7 Mikrometer oder weniger beträgt.

8. Geschäumte Platte nach einem der Ansprüche 1 bis 7, wobei der zahlenmittlere Partikeldurchmesser des Füllstoffs in der geschäumten Platte 0,01 Mikrometer oder mehr, aber 0,1 Mikrometer oder weniger beträgt und ein Anteil des Füllstoffs mit einem Partikeldurchmesser von 10 Mikrometern oder mehr 100 Partikel oder weniger pro Gramm der geschäumten Platte beträgt.

9. Erzeugnis, Folgendes umfassend:
das geschäumte Platte nach einem der Ansprüche 1 bis 8.

10. Erzeugnis nach Anspruch 9, wobei das Erzeugnis mindestens eine Art ist, ausgewählt aus der Gruppe, bestehend aus einer Tasche, einem Verpackungsbehälter, Geschirr, Besteck, Schreibwaren und einem Polstermaterial.

11. Verfahren zur Herstellung einer geschäumten Platte nach einem der Ansprüche 1 bis 8, wobei das Verfahren Folgendes umfasst:
Kneten eines aliphatischen Polyesterharzes und eines Füllstoffs in Gegenwart eines Druckfluids bei einer Temperatur unterhalb des Schmelzpunkts des aliphatischen Polyesterharzes, um eine aliphatische Polyesterharzzusammensetzung zu erzielen; und
Entfernen des Druckfluids aus der aliphatischen Polyesterharzzusammensetzung, um die aliphatische Polyesterharzzusammensetzung aufzuschäumen.

12. Verfahren nach Anspruch 11, wobei das Druckfluid Kohlendioxid ist.

## Revendications

1. Feuille expansée comprenant :
une résine de polyester aliphatique, et
une charge,
dans laquelle un diamètre moyen de mousse de la feuille expansée est inférieur ou égal à 15 microns, le diamètre moyen de mousse étant déterminé par le procédé tel que décrit dans le paragraphe 0029,
dans laquelle l'épaisseur moyenne de la feuille expansée est inférieure ou égale à 3 000 microns, l'épaisseur moyenne étant déterminée par le procédé tel que décrit dans le paragraphe 0073, et
dans laquelle un rapport d'une longueur d'un côté de la feuille expansée dans une direction la plus longue ou d'un côté de la feuille expansée dans une direction perpendiculaire à la direction la plus longue à l'épaisseur moyenne est supérieur ou égal à 250.

2. Feuille expansée selon la revendication 1, dans laquelle la charge est de la silice.

3. Feuille expansée selon la revendication 2, dans laquelle une proportion de la silice dans la feuille expansée est de 0,1 % en masse à 10 % en masse.

4. Feuille expansée selon la revendication 2 ou 3, dans laquelle une proportion de la silice est supérieure ou égale à 50 % en masse, rapportée à une quantité totale de substances inorganiques dans la feuille expansée.

5. Feuille expansée selon l'une quelconque des revendications 1 à 4, dans laquelle un diamètre de particule moyen en nombre de la charge est égal ou supérieur à 0,01 microns, mais inférieur ou égal à 0,1 microns.

6. Feuille expansée selon l'une quelconque des revendications 1 à 5, dans laquelle une proportion de la résine de polyester aliphatique est égale ou supérieure à 98 % en masse, rapportée à une quantité totale de substances organiques dans la feuille expansée.

7. Feuille expansée selon l'une quelconque des revendications 1 à 6, dans laquelle le diamètre moyen de mousse de la feuille expansée est inférieur ou égal à 7 microns.

8. Feuille expansée selon l'une quelconque des revendications 1 à 7, dans laquelle le diamètre de particule moyen en nombre de la charge dans la feuille expansée est égal ou supérieur à 0,01 microns, mais inférieur ou égal à 0,1 microns, et une proportion de la charge ayant un diamètre de particule égal ou supérieur à 10 microns est inférieure ou égale à 100 particules par gramme de la feuille expansée.

9. Produit manufacturé comprenant :
la feuille expansée selon l'une quelconque des revendications 1 à 8.

10. Produit manufacturé selon la revendication 9, dans lequel le produit manufacturé est au moins un type de produit sélectionné dans le groupe constitué par un sac, un contenant d'emballage, un article de vaisselle, un couvert, un article de papeterie, et un matériau de rembourrage.

11. Procédé de fabrication d'une feuille expansée selon l'une quelconque des revendications 1 à 8, le procédé comprenant :
le malaxage d'une résine de polyester aliphatique et d'une charge en présence d'un fluide de compression à une température inférieure au point de fusion de la résine de polyester aliphatique, pour obtenir une composition de résine de polyester aliphatique, et
l'enlèvement du fluide de compression de la composition de résine de polyester aliphatique pour faire mousser la composition de résine de polyester aliphatique.

12. Procédé selon la revendication 11, dans lequel le fluide de compression est du dioxyde de carbone.
